(19) **Europäisches Patentamt / European Patent Office / Office européen des brevets**

(11) **EP 4 501 969 A1**

(12) **EUROPEAN PATENT APPLICATION**
published in accordance with Art. 153(4) EPC

(43) Date of publication:
**05.02.2025 Bulletin 2025/06**

(21) Application number: **23779836.8**

(22) Date of filing: **20.03.2023**

(51) International Patent Classification (IPC):
**C08F 2/18** *(2006.01)*          **B01J 13/18** *(2006.01)*

(52) Cooperative Patent Classification (CPC):
**B01J 13/18; C08F 2/18**

(86) International application number:
**PCT/JP2023/010884**

(87) International publication number:
**WO 2023/189820 (05.10.2023 Gazette 2023/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.03.2022 JP 2022051362**

(71) Applicant: **Zeon Corporation**
**Tokyo 100-8246 (JP)**

(72) Inventors:
- **TSUMURA, Ryo**
  **Tokyo 100-8246 (JP)**
- **YAGYU, Sakyo**
  **Tokyo 100-8246 (JP)**

(74) Representative: **Kraus & Lederer PartGmbB**
**Thomas-Wimmer-Ring 15**
**80539 München (DE)**

(54) **HOLLOW PARTICLE**

(57) Provided are hollow particles each comprising a shell containing a resin and a hollow portion surrounded by the shell, wherein the resin is constituted by a shell polymer containing a cross-linkable monomer unit, the hollow particles have a true density of $1.16\,\text{g/cm}^3$ or more, and C of the hollow particles calculated from Expression (1) below has a value of 0.94 or more. Expression (1): $C = A \times (100 - B)/100$ (where A represents the value (unit: $\text{g/cm}^3$) of the true density of the hollow particles, and B represents the value (unit: mass%) of the proportion of a monofunctional monomer unit contained in the shell polymer).

Processed by Luminess, 75001 PARIS (FR)

**Description**

TECHNICAL FIELD

The present invention relates to hollow particles.

BACKGROUND ART

Hollow particles such as hollow resin particles produced by polymerization of a polymerizable monomer are particles having hollow portions within themselves. Since hollow particles can scatter light better to further reduce transmittivity of light compared to solid particles substantially filled with a resin or the like, such hollow particles are generally used in applications to aqueous coating materials, paper coating compositions, and the like as organic pigments or shielding agents having excellent optical properties such as opacity and whiteness, and are further also used as additives for molded bodies such as light-reflective plates, thermal insulation materials, and sound shielding materials (additives added to molding resins).

As techniques related to such hollow particles, for example, Patent Document 1 discloses hollow resin particles each having a shell and a hollow portion surrounded with the shell, wherein the shell contains an aromatic polymer (P1) obtained by polymerizing a monomer composition comprising an aromatic cross-linkable monomer (a), an aromatic monofunctional monomer (b), and an (meth)acrylic acid ester monomer (c) represented by a specific formula (1).

RELATED ART DOCUMENTS

Patent Document

Patent Document 1: WO 2021/085189

SUMMARY OF THE INVENTION

PROBLEM TO BE SOLVED BY THE INVENTION

However, the present inventor, who has conducted research, has found that the hollow particles disclosed in Patent Document 1 have poor solvent resistance, and when the hollow particles are used together with a solvent, the hollow particles are likely to be swollen by the solvent, resulting a reduction in void ratio of the hollow particles; as a result, effects of adding the hollow particles (e.g., weight reduction or a reduction in dielectric loss tangent) are insufficient, for example, when a molding resin or the like blended with the hollow particles is molded.

An object of the present invention is to provide hollow particles having high solvent resistance.

MEANS FOR SOLVING PROBLEMS

The present inventor, who has conducted research to achieve the above object, has found that the above object can be achieved by hollow particles each comprising a shell formed of a shell polymer containing a cross-linkable monomer unit and a hollow portion, wherein the hollow particles have a true density of $1.16\,\mathrm{g/cm^3}$ or more, and C calculated from a specific expression (1) has a value of 0.94 or more, and thus has completed the present invention.

Specifically, the present invention provides hollow particles each comprising a shell containing a resin and a hollow portion surrounded by the shell,

wherein the resin is constituted by a shell polymer containing a cross-linkable monomer unit,
the hollow particles have a true density of $1.16\,\mathrm{g/cm^3}$ or more, and
C of the hollow particles calculated from Expression (1) below has a value of 0.94 or more:

$$C = A \times (100 - B)/100 \quad \text{Expression (1)}$$

where A represents the value (unit: $\mathrm{g/cm^3}$) of the true density of the hollow particles, and B represents the value (unit: mass%) of the proportion of a monofunctional monomer unit contained in the shell polymer.

In the hollow particles according to the present invention, preferably, the shell polymer contains a heteroatom-containing monomer unit, and the proportion of the heteroatom-containing monomer unit contained in the shell polymer is 80 mass% or more.

In the hollow particles according to the present invention, preferably, the proportion of precipitating hollow particles when the hollow particles are immersed in toluene for 48 hours is less than 5 mass%.

In the hollow particles according to the present invention, preferably, the proportion of precipitating hollow particles when the hollow particles are immersed in methyl ethyl ketone for 24 hours is less than 5 mass%.

In the hollow particles according to the present invention, preferably, the proportion of precipitating hollow particles when the hollow particles are immersed in acetone for 24 hours is less than 5 mass%.

Preferably, the hollow particles according to the present invention has a void ratio of 60% or more.

In the hollow particles according to the present invention, preferably, the shell polymer contains a tri- or higher functional cross-linkable monomer unit and a bifunctional cross-linkable monomer unit as the cross-linkable monomer unit.

In the hollow particles according to the present invention, preferably, the shell polymer contains the bifunctional cross-linkable monomer unit and the tri- or higher functional heteroatom-containing cross-linkable monomer unit in a mass ratio of "bifunctional cross-linkable monomer unit:tri- or higher functional heteroatom-containing cross-linkable monomer unit" of 10:90 to 98:2.

Preferably, the hollow particles according to the present invention have a volume average particle size (Dv) of 1 to 12 $\mu$m.

EFFECTS OF INVENTION

The present invention provides hollow particles having high solvent resistance.

DESCRIPTION OF EMBODIMENTS

<Hollow particles>

The hollow particles according to the present invention are hollow particles each comprising a shell containing a resin and a hollow portion surrounded by the shell, wherein the resin is constituted by a shell polymer containing a cross-linkable monomer unit, the hollow particles have a true density of 1.16 g/cm$^3$ or more, and C of the hollow particles calculated from Expression (1) below has a value of 0.94 or more:

$$C = A \times (100 - B)/100 \quad \text{Expression (1)}$$

where A represents the value (unit: g/cm$^3$) of the true density of the hollow particles, and B represents the value (unit: mass%) of the proportion of a monofunctional monomer unit contained in the shell polymer.

The shell included in the hollow particles according to the present invention contains a resin constituted by a shell polymer.

The shell polymer is a polymer used to form a shell of the hollow particles, and contains a cross-linkable monomer unit. The cross-linkable monomer forming a cross-linkable monomer unit has two or more polymerizable functional groups, and forms a cross-linking bond in the resin by a polymerization reaction. As the cross-linkable monomer, a compound having at least one ethylenically unsaturated bond as a polymerizable functional group is generally used.

Examples of the cross-linkable monomer forming a cross-linkable monomer unit include cross-linkable hydrocarbon monomers and heteroatom-containing cross-linkable monomers.

Examples of the cross-linkable hydrocarbon monomers include, but not particularly limited to, bifunctional cross-linkable hydrocarbon monomers such as divinylbenzene, divinyldiphenyl, and divinylnaphthalene. Among these, divinylbenzene is preferred.

Examples of the heteroatom-containing cross-linkable monomers include, but not particularly limited to, bifunctional heteroatom-containing cross-linkable monomers such as diallyl phthalate, allyl (meth)acrylate [indicating allyl acrylate and/or allyl methacrylate. Hereinafter, the same is applied.], ethylene glycol di(meth)acrylate, and pentaerythritol di(meth)acrylate; tri- or higher functional heteroatom-containing cross-linkable monomers such as trimethylolpropane tri(meth)acrylate, ditrimethylolpropane tetra(meth)acrylate, pentaerythritol tri(meth)acrylate, pentaerythritol tetra(meth)acrylate, ethoxified pentaerythritol tetra(meth)acrylate, dipentaerythritol hexa(meth)acrylate, and dipentaerythritol poly(meth)acrylate; and the like. Among these, ethylene glycol di(meth)acrylate, trimethylolpropane tri(meth)acrylate, pentaerythritol tetra(meth)acrylate, dipentaerythritol poly(meth)acrylate, and pentaerythritol tri(meth)acrylate are preferred, ethylene glycol di(meth)acrylate, trimethylolpropane tri(meth)acrylate, and pentaerythritol tetra(meth)acrylate are more preferred, ethylene glycol dimethacrylate, trimethylolpropane trimethacrylate, and pentaerythritol tetramethacrylate are still more preferred, and ethylene glycol dimethacrylate and trimethylolpropane trimethacrylate are particularly preferred.

Cross-linkable monomers are preferably cross-linkable hydrocarbon monomers, ethylene glycol di(meth) acrylate, trimethylolpropane tri(meth)acrylate, pentaerythritol tetra(meth)acrylate, dipentaerythritol poly(meth)acrylate, and pentaerythritol tri(meth)acrylate, are more preferably divinylbenzene, ethylene glycol di(meth)acrylate, trimethylolpropane tri(meth)acrylate, and pentaerythritol tetra(meth)acrylate, are still more preferably divinylbenzene, ethylene glycol dimethacrylate, trimethylolpropane trimethacrylate, and pentaerythritol tetramethacrylate, and are particularly preferably ethylene glycol dimethacrylate and trimethylolpropane trimethacrylate.

These cross-linkable monomers may be used alone or in combination. In the hollow particles according to the present invention, the shell polymer preferably contains a bifunctional cross-linkable monomer unit and a tri- or higher functional cross-linkable monomer, more preferably contains a bifunctional cross-linkable monomer unit and a tri- or higher functional heteroatom-containing cross-linkable monomer unit, and still more preferably contains a bifunctional heteroatom-containing cross-linkable monomer unit and a tri- or higher functional heteroatom-containing cross-linkable monomer units. Although the tri- or higher functional cross-linkable monomer is not particularly limited, tri- to hexafunctional cross-linkable monomers are preferred, tri- to pentafunctional cross-linkable monomers are more preferred, tri- to tetrafunctional cross-linkable monomers are still more preferred, and trifunctional cross-linkable monomers are particularly preferred. In the hollow particles according to the present invention, the shell polymer can contain the cross-linkable hydrocarbon monomer unit and the heteroatom-containing cross-linkable monomer unit.

The proportion of the bifunctional cross-linkable monomer unit contained in the shell polymer is not particularly limited, and is preferably 10 to 98 mass%, more preferably 25 to 95 mass%, still more preferably 40 to 90 mass%, particularly preferably 50 to 85 mass%, most preferably 55 to 80 mass%.

The proportion of the tri- or higher functional heteroatom-containing cross-linkable monomer unit in the shell polymer is not particularly limited, and is preferably 90 to 2 mass%, more preferably 75 to 5 mass%, still more preferably 60 to 10 mass%, particularly preferably 50 to 15 mass%, most preferably 45 to 20 mass%.

Although the shell polymer contains the bifunctional cross-linkable monomer unit and the tri- or higher functional heteroatom-containing cross-linkable monomer unit in any ratio, the mass ratio of "bifunctional cross-linkable monomer unit:tri- or higher functional heteroatom-containing cross-linkable monomer unit" is preferably 10:90 to 98:2, more preferably 25:75 to 95:5, still more preferably 40:60 to 90:10, particularly preferably 50:50 to 85:15, most preferably 55:45 to 80:20.

The shell polymer may be composed of substantially only a cross-linkable monomer unit, or may contain a monofunctional monomer unit in addition to the cross-linkable monomer unit.

The monofunctional monomer forming a monofunctional monomer unit is a monomer having only one polymerizable functional group. A compound having an ethylenically unsaturated bond as the polymerizable functional group is generally used. Examples of the monofunctional monomer forming a monofunctional monomer unit include monofunctional hydrocarbon monomers and heteroatom-containing monofunctional monomers.

Examples of the monofunctional hydrocarbon monomers include, but not particularly limited to, aromatic vinyl monomers such as styrene, ethylvinylbenzene, vinyltoluene, α-methylstyrene, p-methylstyrene, and halogenated styrene; monoolefin monomers such as ethylene, propylene, butylene, and 4-methyl-1-pentene; diene monomers such as butadiene and isoprene; and the like. Among these, styrene and ethylvinylbenzene are preferred.

Examples of the heteroatom-containing monofunctional monomers include, but not particularly limited to, hydrophilic monofunctional monomers; acrylic monovinyl monomers such as methyl (meth)acrylate, ethyl (meth)acrylate, butyl (meth)acrylate, 2-ethylhexyl (meth)acrylate, and lauryl (meth)acrylate; vinyl carboxylate ester monomers such as vinyl acetate; vinyl halide monomers such as vinyl chloride; vinylidene halide monomers such as vinylidene chloride; vinylpyridine monomers; and the like.

The hydrophilic monofunctional monomers preferably have solubility in water of 1 mass% or more. Examples of such hydrophilic monofunctional monomers include, but not particularly limited to, monofunctional monomers having a hydrophilic group, such as acid group-containing monomers, hydroxyl group-containing monomers, amide group-containing monomers, and polyoxyethylene group-containing monomers.

The acid group-containing monomer indicates a monomer containing an acid group. The acid group herein includes both of proton donating groups (Bronsted acid groups) and electron-pair receiving groups (Lewis acid groups). The acid group-containing monomer is not particularly limited as long as it has an acid group. Examples thereof include carboxyl group-containing monomers, sulfonic acid group-containing monomers, and the like. Examples of the carboxyl group-containing monomers include ethylenically unsaturated carboxylic acid monomers such as acrylic acid, methacrylic acid, crotonic acid, cinnamic acid, itaconic acid, fumaric acid, maleic acid, and butene tricarboxylic acid; monoalkyl esters of unsaturated dicarboxylic acids such as monoethyl itaconate, monobutyl fumarate, and monobutyl maleate; and the like. Examples of the sulfonic acid group-containing monomers include styrenesulfonic acid and the like.

Examples of the hydroxyl group-containing monomers include 2-hydroxyethyl (meth)acrylate, 2-hydroxypropyl (meth)acrylate, 4-hydroxybutyl (meth)acrylate, and the like.

Examples of the amide group-containing monomers include acrylamide, dimethylacrylamide, and the like.

Examples of the polyoxyethylene group-containing monomers include methoxypolyethylene glycol (meth)acrylate and the like.

These monofunctional monomer units can be used alone or in combination.

The proportion of the cross-linkable monomer unit contained in the shell polymer is not particularly limited, and is preferably 82 mass% or more, more preferably 85 mass% or more, still more preferably 88 mass% or more, particularly preferably 90 mass% or more, most preferably 95 mass% or more. When the proportion of the cross-linkable monomer contained falls within these ranges above, a covalent bond network is densely formed in the shell, and generation of communication holes of the shell and shell defects can also be suppressed. As a result, the hollow particles can have excellent mechanical strength. When the proportion of the cross-linkable monomer contained falls within these ranges above, higher solvent resistance is obtained.

The proportion of the monofunctional monomer unit contained in the shell polymer is not particularly limited. From the viewpoint of the mechanical strength of the hollow particles and higher solvent resistance thereof, the proportion is preferably 0 to 18 mass%, more preferably 0 to 15 mass%, still more preferably 0 to 12 mass%, particularly preferably 0 to 10 mass%, most preferably 0 to 5 mass%.

The value (unit: mass%) of the proportion of the cross-linkable monomer unit contained in the shell polymer is represented by (100 - B) in Expression (1) described later, and the value (unit: mass%) of the proportion of the monofunctional monomer unit contained in the shell polymer is represented by B in Expression (1) described later.

The shell polymer may contain a heteroatom-containing monomer unit. Examples of the heteroatom-containing monomer forming a heteroatom-containing monomer unit include the above-mentioned heteroatom-containing cross-linkable monomers and heteroatom-containing monofunctional monomers.

The proportion of the heteroatom-containing monomer unit contained in the shell polymer is not particularly limited. To obtain higher solvent resistance, the proportion is preferably 50 mass% or more, more preferably 60 mass% or more, still more preferably 70 mass% or more, particularly preferably 80 mass% or more. When the proportion of the heteroatom-containing monomer unit contained falls within these ranges above, the hollow particles can have further increased solvent resistance not only in a polar solvent but also in a nonpolar solvent.

When significantly high solvent resistance in a nonpolar solvent is required, the proportion of the heteroatom-containing monomer unit contained is preferably 82.5 mass% or more, more preferably 85 mass% or more, still more preferably 87.5 mass% or more, further still more preferably 90 mass% or more, particularly preferably 92.5 mass% or more, most preferably 95 mass% or more.

On the other hand, when excellent electrical insulation is required, the proportion of the heteroatom-containing monomer unit contained is preferably 96 mass% or less, more preferably 93 mass% or less, still more preferably 90 mass% or less, particularly preferably 87 mass% or less, most preferably 84 mass% or less.

The hollow particles according to the present invention are particles each comprising a shell (outer shell) containing the resin and a hollow portion surrounded by the shell. In the present invention, the hollow portion is a hollow space clearly distinguished from the shell of each hollow particle formed of the resin. Although the hollow particles according to the present invention may have one or two or more hollow portions, to maintain a favorable balance between a void ratio and mechanical strength, preferably, the hollow particles according to the present invention each have only one hollow portion. In the hollow particles according to the present invention, the proportion of particles having only one hollow portion is preferably 90 mass% or more, more preferably 95 mass% or more.

In the hollow particles according to the present invention, although usually, the shell does not have communication holes and shell defects and the hollow portion is isolated by the shell from the outside of the particle, the shell may have one or two or more communication holes, and the hollow portion may be in communication with the outside of the particle through the communication hole(s). The shell of the hollow particle and a partition dividing adjacent hollow portions may be porous when the particle has two or more hollow portions. In this case, the hollow portions have a size large enough to be clearly distinguished from a large number of fine spaces homogeneously dispersed inside the porous structure.

The hollow portions of the hollow particles according to the present invention may be filled with a gas such as air, or may contain a solvent.

The hollow particles according to the present invention can have any shape as long as the hollow portion is formed inside the particles. The hollow particles can have any outer shape, and preferably have a spherical shape due to ease of production.

The outer shape of the hollow particles can be verified by observing the particles with an SEM or a TEM, for example. The inner shape of the hollow particles can be verified by SEM observation of cross-sections of the particles or TEM observation of the particles, for example.

The hollow particles according to the present invention may have an average circularity of 0.950 to 0.995. The hollow particles according to the present invention have high pressure resistance when they contain particles having a circularity of 0.85 or less in a small proportion. The particles having a circularity of 0.85 or less are typically particles having deformation such as depressions or crack, and may be referred to as "odd-shape particles" in the present invention in some cases. Such odd-shape particles have pressure resistance inferior to that of spherical particles because external pressure is likely to be locally applied thereto. Moreover, compared to the spherical particles, the odd-shape particles are more likely to aggregate when those are dispersed in a binder resin, and have inferior dispersibility. When the odd-shape particles are dispersed in a binder resin, aggregates are readily generated, and external pressure is likely to be applied to aggregates, resulting in more inferior pressure resistance. For this reason, the dispersibility and pressure resistance of the hollow particles can be improved by reducing the proportion of the odd-shape particles contained in the hollow particles.

Although the hollow particles according to the present invention may contain, as impurities, a small amount of particles having a low circularity due to crack or deformation of particles, the proportion of the particles having a circularity of 0.85 or less is preferably 10 mass% or less, more preferably 7 mass% or less, still more preferably 5 mass% or less, further still more preferably 4 mass% or less, particularly preferably 3 mass% or less in 100 mass% of the hollow particles according to the present invention.

The circularity is defined as a value obtained by dividing a diameter (circle area-equivalent diameter) of a circle having the same area as that of a projected image of a particle by a diameter of a circle having the same perimeter as that of a projected image of the particle (diameter of the circle of equal perimeter). A particle in a perfect spherical shape has a circularity of 1, and the circularity becomes smaller as the particle has a more complex surface shape.

In the present invention, the circularity is measured using a flow-type particle image analyzer at an image resolution of 0.185 $\mu$m/pixel. A flow-type particle image analyzer preferably used can be a trade name "IF-3200" available from JASCO INTERNATIONAL CO., LTD., for example. A sample to be measured is prepared, for example, by adding 0.10 to 0.12 g of hollow particles to an aqueous solution (concentration: 0.3%) of linear sodium alkylbenzenesulfonate to prepare a mixed solution, and dispersing the mixed solution with an ultrasonic washing machine for 5 minutes. The average circularity is the average of the circularities of 1000 to 3000 particles arbitrarily selected.

The hollow particles according to the present invention have a true density of 1.16 g/cm$^3$ or more, and the value of C calculated from Expression (1) described later is 0.94 or more. In the present invention, it is found that when the true density and the value of C fall within these ranges above, the hollow particles have high solvent resistance, and thus the present invention has been completed.

In this specification, the true density of the hollow particles indicates the density of only the shell portions in the hollow particles. Specifically, the true density of the hollow particles is measured by the following method. After the hollow particles are preliminarily ground, about 10 g of ground pieces of the hollow particles is added to a volumetric flask having a volume of 100 cm$^3$, and the mass of the ground pieces added is precisely measured. In the next step, isopropanol is added to a volumetric flask as in the measurement of the apparent density, the mass of isopropanol is precisely measured, and based on Expression (I) below, the true density (g/cm$^3$) of the hollow particles is calculated.

true density (g/cm$^3$) of hollow particles = [mass of ground pieces of hollow particles] ÷ (100 - [mass of isopropanol] ÷ [density of isopropanol at measurement temperature])     (I)

The true density of the hollow particles according to the present invention can be any value as long as it is 1.16 g/cm$^3$ or more, and is not particularly limited. To obtain hollow particles excellent mechanical strength and higher solvent resistance, the true density is preferably 1.16 to 1.25 g/cm$^3$, more preferably 1.16 to 1.22 g/cm$^3$, still more preferably 1.16 to 1.20 g/cm$^3$. When significantly high solvent resistance is required, the true density of the hollow particles is preferably 1.17 g/cm$^3$ or more, more preferably, 1.18 g/cm$^3$ or more, still more preferably 1.19 g/cm$^3$ or more, particularly preferably 1.195 g/cm$^3$ or more.

The value of C of the hollow particles according to the present invention calculated from Expression (1) below is 0.94 or more.

$$C = A \times (100 - B)/100 \text{ Expression (1)}$$

where A represents the value (unit: g/cm$^3$) of the true density of the hollow particles, and B represents the value (unit: mass%) of the proportion of a monofunctional monomer unit contained in the shell polymer.

In the hollow particles according to the present invention, the value of C calculated from Expression (1) can be any value as long as it is 0.94 or more, and is not particularly limited. To provide excellent electrical insulation and higher solvent resistance, the value of C is preferably 0.96 to 1.25, more preferably 0.98 to 1.24, still more preferably 1.00 to 1.22, particularly preferably 1.03 to 1.21, most preferably 1.06 to 1.20.

The true density of the hollow particles and the value of C calculated from Expression (1) can be controlled by controlling the monomer composition of the shell polymer.

The void ratio of the hollow particles according to the present invention can be 60% or more, for example. According to the present invention, the void ratio of the hollow particles can be preferably 40 to 95%, more preferably 50 to 90%, still more preferably 55 to 85%, particularly preferably 60 to 80%. When the void ratio falls within these ranges above, for example, sufficient effects of adding the hollow particles (such as weight reduction and a reduction in dielectric loss tangent) can be obtained in pressurized molding of a molding resin blended with the hollow particles according to the present invention.

The void ratio of the hollow particles is calculated from the apparent density $D_1$ of the hollow particles and the true density $D_0$ thereof. The apparent density $D_1$ corresponds to the density of the total hollow particles when the hollow portions are regarded as part of the hollow particles. When a component other than the components constituting the shell (such as the shell polymer) is contained in the hollow portions of the hollow particles, it can be considered that the component other than the components constituting the shell is mostly derived from the residual solvent. Thus, the density of the component other than the components constituting the shell is regarded as equal to the true density $D_0$ of the hollow particles, and the void ratio is determined. Specifically, using the mass including the mass of the component other than the components constituting the shell as the mass of the hollow particles, the apparent density $D_1$ is calculated, and then, using the apparent density $D_1$ thus calculated, the void ratio of the hollow particles is calculated.

The apparent density $D_1$ of the hollow particles is measured as follows. Initially, about 30 $cm^3$ of the hollow particles is added to a volumetric flask having a volume of 100 $cm^3$, and the mass of the added hollow particles is precisely measured. Next, isopropanol is added into the volumetric flask containing the hollow particles up to the exact gauge line, carefully to avoid inclusion of air bubbles. The mass of isopropanol added to volumetric flask is precisely measured, and based on Expression (I) below, the apparent density $D_1$ ($g/cm^3$) of the hollow particles is calculated.

$$\text{apparent density } D_1 \text{ } (g/cm^3) \text{ of hollow particles} = [\text{mass of hollow --> particles}] \div (100 - [\text{mass of isopropanol}] \div [\text{density of isopropanol at measurement temperature}]) \quad \text{(II)}$$

The void ratio (%) of the hollow particles is calculated from the apparent density $D_1$ of the hollow particles and the true density $D_0$ thereof using Expression (III) below:

$$\text{void ratio (\%) of hollow particles} = 100 - [\text{apparent density } D_1 \text{ of hollow particles}] \div [\text{true density of hollow particles } D_0] \times 100 \quad \text{(III)}$$

The volume average particle size (Dv) of the hollow particles according to the present invention is not particularly limited, and is preferably 1 to 12 $\mu$m, more preferably 1.5 to 11 $\mu$m, still more preferably 2 to 10 $\mu$m, particularly preferably 2.2 to 9.5 $\mu$m, most preferably 2.5 to 9 $\mu$m. When the hollow particles are added to a substrate having a small thickness, the volume average particle size (Dv) is preferably 8 $\mu$m or less, more preferably 7 $\mu$m or less, still more preferably 6 $\mu$m or less, particularly preferably 5 $\mu$m or less, most preferably 4 $\mu$m or less.

The particle size distribution (Dv/Dn) (volume average particle size (Dv)/number average particle diameter (Dn)) of the hollow particles according to the present invention is not particularly limited, and is preferably 1.02 to 2.00, more preferably 1.04 to 1.60, still more preferably 1.06 to 1.50, particularly preferably 1.08 to 1.40, most preferably 1.10 to 1.30. When the particle size distribution (Dv/Dn) of the hollow particles falls within these ranges above, for example, during pressurized molding of a molding resin blended with the hollow particles according to the present invention, deformation of the hollow particles is suppressed, and sufficient effects of adding the hollow particles (such as weight reduction and a reduction in dielectric loss tangent) can be obtained.

The volume average particle size (Dv) and the number average particle diameter (Dn) of the hollow particles can be determined as follows: for example, the particle sizes of the hollow particles are measured by a laser diffraction-type particle size distribution analyzer, the number average and the volume average thereof are calculated, and the obtained values are defined as the number average particle diameter (Dn) and the volume average particle size (Dv) of the particles, respectively. The particle size distribution (Dv/Dn) is the value obtained by dividing the volume average particle size (Dv) by the number average particle diameter (Dn).

The volume average particle size (Dv) and the particle size distribution (Dv/Dn) of the hollow particles can be controlled by controlling the monomer composition of the shell polymer, the type and amount of the dispersion stabilizer used in suspension polymerization of the hollow particles, and the suspension condition, for example.

The hollow particles according to the present invention are constituted by a shell polymer containing a cross-linkable monomer unit, and have a true density of 1.16 $g/cm^3$ or more with the value of C calculated from Expression (1) of 0.94 or more, and therefore the hollow particles have high solvent resistance. Specifically, the hollow particles according to the present invention have high solvent resistance such as swelling resistance against nonpolar solvents such as toluene and that against polar solvents such as methyl ethyl ketone and acetone.

In the hollow particles according to the present invention, preferably, the proportion of precipitating hollow particles when the hollow particles are immersed in toluene for 48 hours is less than 5 mass%, and more preferably, the proportion of the precipitating hollow particles in toluene for 240 hours is less than 5 mass%.

In the hollow particles according to the present invention, preferably, the proportion of precipitating hollow particles when the hollow particles are immersed in methyl ethyl ketone for 24 hours is less than 5 mass%.

In the hollow particles according to the present invention, preferably, the proportion of precipitating hollow particles when the hollow particles are immersed in acetone for 24 hours is less than 5 mass%.

The thermal decomposition starting temperature of the hollow particles according to the present invention is preferably 150 to 400°C, more preferably 200 to 350°C. The hollow particles having a thermal decomposition starting temperature within these ranges have high heat resistance. The thermal decomposition starting temperature of the hollow particles is a temperature at which the weight reduces by 5%. The thermal decomposition starting temperature of the hollow particles can be measured with a TG-DTA apparatus under an air atmosphere at an air flow rate of 230 mL/min and a heating rate of 10°C/min.

Examples of applications of the hollow particles according to the present invention include additives for members used in a variety of fields (such as automobile, electrical, electronic, construction, aviation, and space fields), such as low dielectric bodies, thermal insulation materials, sound shielding materials, and light reflecting materials, containers for food products, footwears such as sport shoes and sandals, parts for home appliances, bicycle parts, stationery, tools, and the like. Especially, the hollow particles according to the present invention are suitably used as an additive for implementing low transmission loss in the electric or electronic field. For example, the hollow particles according to the present invention are suitably used as a material for an electronic circuit substrate, and specifically, by adding the hollow particles according to the present invention to the insulating resin layer of an electronic circuit substrate, transmission loss of the electronic circuit substrate can be reduced.

Besides, the hollow particles according to the present invention are also suitably used as an additive for semiconductor materials such as interlayer insulating materials, dry film resists, solder resists, bonding wires, bonding sheets, magnet wires, semiconductor sealing materials, epoxy sealing materials, mold underfills, underfills, die bond pastes, buffer coating materials, copper clad laminates, flexible substrates, high frequency device modules, antenna modules, and in-vehicle radars. Among these, the hollow particles according to the present invention are particularly suitable as an additive for semiconductor materials such as interlayer insulating materials, solder resists, bonding sheets, magnet wires, epoxy sealing materials, underfills, buffer coating materials, copper clad laminates, flexible substrates, high frequency device modules, antenna modules, and in-vehicle radars. The bonding sheet indicates a material forming an insulating adhesive layer, which is used to bond a conductor layer to an organic insulating layer when a multilayer printed circuit board is produced.

The hollow particles according to the present invention demonstrate an excellent effect as a weight reducing material, a thermal insulation material, a soundproof material, or a vibration damping material when added to a molded article. Thus, the hollow particles according to the present invention are suitable as an additive for a molded article, and can be used as an additive for a resin molded article, for example. Moreover, the hollow particles according to the present invention can also be added as a filler in fiber-reinforced molded articles formed of a resin and reinforcing fibers.

Since the hollow particles according to the present invention have a high void ratio, are difficult to crush, and have high heat resistance, these hollow particles satisfy thermally insulating properties and buffer properties (cushioning properties) required for an undercoat material, and also satisfy heat resistance requirement for the thermosensitive paper application. The hollow particles according to the present invention are also useful as a plastic pigment having excellent gloss and covering ability, and the like.

Furthermore, because a useful component such as a fragrance, a chemical, a pesticide, or an ink component can be sealed inside the hollow particles according to the present invention by a method such as immersion or depressurized or pressurized immersion, the hollow particles according to the present invention can be used in a variety of applications depending on the component contained inside the hollow particles.

The hollow particles according to the present invention are also suitably used as a rust inhibitor. Since the hollow particles according to the present invention are also useful as an additive for reducing electrical conductivity, for example, a coating material containing the hollow particles according to the present invention can be used as an anti-rust coating material for enhancing anticorrosive properties or rustproofness of a steel material or the like (such as an undercoat for coating or a lubricant coating material). Alternatively, an anti-rust additive can also be encapsulated in the hollow particles added to the anti-rust coating material.

<Method of producing hollow particles>

The hollow particles according to the present invention can be produced, suitably, by a production method comprising (A) a mixed solution preparation step, (B) a suspension step, (C) a polymerization step, and (D) a solvent removal step.

Specifically, the hollow particles according to the present invention can be produced, suitably, by a production method comprising:

(A) a mixed solution preparation step of preparing a mixed solution containing polymerizable monomers containing a cross-linkable monomer, a hydrophobic organic solvent, a polymerization initiator, and an aqueous medium;
(B) a suspension step of suspending the mixed solution obtained in the mixed solution preparation step, thereby preparing a suspension in which droplets of the polymerizable monomer composition containing the polymerizable monomers, the hydrophobic organic solvent, and the polymerization initiator are dispersed in the aqueous medium;
(C) a polymerization step of subjecting the suspension obtained in the suspension step to a polymerization reaction, thereby preparing a precursor composition containing precursor particles having hollow portions and containing the hydrophobic organic solvent encapsulated in the hollow portions; and
(D) a solvent removal step of removing a hydrophobic organic solvent encapsulated in the precursor particles obtained in the polymerization step.

(A) Mixed solution preparation step

The mixed solution preparation step is a step of preparing a mixed solution containing polymerizable monomers containing a cross-linkable monomer, a hydrophobic organic solvent, a polymerization initiator, and an aqueous medium. The hollow particles according to the present invention are preferably produced by the production method comprising such a step.

[Polymerizable monomer]

The polymerizable monomers to be used are the above-mentioned cross-linkable monomer, and optionally the above-mentioned monofunctional monomer. The monomer composition of the polymerizable monomers can be any monomer composition as long as the monomer composition of the target shell polymer can be obtained.
The content of the polymerizable monomers (the total amount of the cross-linkable monomer and the monofunctional monomer) in the mixed solution prepared in the mixed solution preparation step is not particularly limited, but from the viewpoint of the balance between the particle size and the mechanical strength, the content is preferably 15 to 55 mass%, more preferably 25 to 50 mass% relative to 100 mass% of the total mass of the components in the mixed solution excluding the aqueous medium.

[Hydrophobic organic solvent]

As the hydrophobic organic solvent, a non-polymerizable and poorly water-soluble organic solvent is used. The hydrophobic organic solvent acts as a spacer material which forms hollow portions inside the particles.
Although the hydrophobic organic solvent is not particularly limited, hydrocarbon solvents can be suitably used. Specific examples thereof include solvents having relatively high volatility, such as saturated hydrocarbon solvents such as butane, pentane, normal hexane, cyclohexane, heptane, and octane; aromatic hydrocarbon solvents such as benzene, toluene, and xylene; carbon disulfide, carbon tetrachloride, and the like.
For a preferred hydrophobic organic solvent, the proportion of the saturated hydrocarbon solvent in 100 mass% of the total amount of the hydrophobic organic solvent is 50 mass% or more. This causes sufficient phase separation inside droplets of the polymerizable monomer composition prepared in the suspension step described later, and thus hollow particles each having only one hollow portion can be readily obtained, and generation of porous particles can be suppressed. To further suppress generation of porous particles and readily obtain uniform hollow portions of the hollow particles, the proportion of the saturated hydrocarbon solvent is preferably 60 mass% or more, more preferably 80 mass% or more in 100 mass% of the total amount of the hydrophobic organic solvent.
Preferred hydrophobic organic solvents are $C_5$ to $C_8$ hydrocarbon solvents. The $C_5$ to $C_8$ hydrocarbon solvents are easily encapsulated in precursor particles during the polymerization step described later, and can be easily removed from the precursor particles during the solvent removal step described later. Among these, $C_6$ to $C_8$ hydrocarbon solvents are particularly preferred.
From the viewpoint of ease in removal in the solvent removal step described later, the hydrophobic organic solvents are those having a boiling point of preferably 130°C or lower, more preferably 115°C or lower. On the other hand, from the viewpoint of ease in encapsulation in the precursor particles, the hydrophobic organic solvents are those having a boiling point of preferably 30°C or higher, more preferably 50°C or higher.
In the present invention, when the hydrophobic organic solvent is a mixed solvent containing a plurality of hydrophobic organic solvents and a plurality of boiling points is present, the boiling point of the hydrophobic organic solvent is defined as the boiling point of the solvent having the highest boiling point among the solvents contained in the mixed solvent, i.e., the highest boiling point of the plurality of boiling points.
Preferably, the hydrophobic organic solvent has a relative permittivity at 20°C of 3 or less. The relative permittivity is one of indices indicating the level of the polarity of a compound. When the hydrophobic organic solvent has a sufficiently low relative permittivity of 3 or less, it is considered that phase separation quickly progresses in droplets of the polymerizable monomer composition to be prepared in the suspension step described later, and hollow portions are readily formed.

Examples of the hydrophobic organic solvent having a relative permittivity at 20°C of 3 or less include heptane (1.9), cyclohexane (2.0), benzene (2.3), toluene (2.4), and the like (the numerals in the brackets are values of the relative permittivity). Relative permittivity values at 20°C and other technical information can be found in known documents (e.g., "Kagaku Binran Kisohen", edited by Chemical Society of Japan, the 4th revised edition, Maruzen Company, Limited, published on September 30, Heisei 5, pages II-498 to II-503). Examples of the method of measuring the relative permittivity at 20°C include a relative permittivity test in accordance with 23 of JIS C 2101:1999 which is performed at a measurement temperature of 20°C.

The content of the hydrophobic organic solvent in the mixed solution is preferably 50 to 500 parts by mass, more preferably 60 to 400 parts by mass, still more preferably 80 to 350 parts by mass, particularly preferably 100 to 300 parts by mass relative to 100 parts by mass of the total mass of the polymerizable monomers.

[Polymerization initiator]

As the polymerization initiator, use of an oil-soluble polymerization initiator is preferred. By using the oil-soluble polymerization initiator as the polymerization initiator, the polymerization initiator can be suitably taken into droplets of the polymerizable monomer composition in a suspension to be prepared in the suspension step described later.

The oil-soluble polymerization initiator is not particularly limited as long as it has a solubility in water of 0.2 mass% or less and is lipophilic. Examples of the oil-soluble polymerization initiator include benzoyl peroxide, lauroyl peroxide, t-butylperoxide 2-ethylhexanoate, t-butylperoxydiethyl acetate, t-butyl peroxypivalate, 2,2'-azobis(2,4-dimethylvaleronitrile), azobisisobutyronitrile, and the like.

The content of the polymerization initiator is preferably 0.1 to 10 parts by mass, more preferably 0.2 to 5 parts by mass, still more preferably 0.5 to 3 parts by mass relative to 100 parts by mass of the total mass of the polymerizable monomers in the mixed solution. By controlling the content of the polymerization initiator within these ranges above, the polymerization reaction is caused to sufficiently progress, it is less likely that the polymerization initiator may remain after the end of the polymerization reaction, and it is less likely that unexpected side reactions may progress.

[Aqueous medium]

Examples of aqueous media include media selected from the group consisting of water, hydrophilic solvents, and mixtures of water and hydrophilic solvents.

The hydrophilic solvent is not particularly limited as long as it is sufficiently mixed with water and does not cause phase separation, and examples thereof include alcohols such as methanol and ethanol; tetrahydrofuran (THF); dimethyl sulfoxide (DMSO); and the like.

Among these aqueous media, use of water is preferred due to the level of the polarity. When a mixture of water and a hydrophilic solvent is used, to appropriately form droplets of the polymerizable monomer composition containing the polymerizable monomer, the hydrophobic organic solvent, and the polymerization initiator, preferably, the entire mixture does not have an excessively reduced polarity. When a mixture of water and a hydrophilic solvent is used, the mixing ratio (mass ratio) of water to the hydrophilic solvent is preferably 99:1 to 50:50.

In the mixed solution preparation step, a dispersion stabilizer is preferably used in addition of the polymerizable monomers, the hydrophobic organic solvent, the polymerization initiator, and the aqueous medium. In other words, the mixed solution preparation step is preferably a step of preparing a mixed solution containing the polymerizable monomers, the hydrophobic organic solvent, the polymerization initiator, the aqueous medium, and the dispersion stabilizer.

The dispersion stabilizer is a compound which causes droplets of the polymerizable monomer composition to be dispersed in the aqueous medium in the suspension step described later, and may be either of an inorganic dispersion stabilizer or an organic dispersion stabilizer.

Examples of inorganic dispersion stabilizers include colloidal silica, magnesium hydroxide, calcium phosphate, calcium carbonate, barium sulfate, calcium oxalate, calcium carbonate, magnesium carbonate, barium carbonate, tricalcium phosphate, aluminum hydroxide, magnesium hydroxide, ferric hydroxide, hydroxy apatite, silicic acid diatomite, clay, bentonite, and the like.

Examples of organic dispersion stabilizers include methylcellulose, hydroxypropylmethylcellulose, carboxymethylcellulose, starch, and the like.

Among these, inorganic dispersion stabilizers are preferred from the viewpoint of a high effect of stabilizing dispersion and ease in control of the particle diameter of droplets of the polymerizable monomer composition containing the polymerizable monomers, the hydrophobic organic solvent, and the polymerization initiator. Among these inorganic dispersion stabilizers, metal-containing dispersion stabilizers are preferred, and poorly water-soluble inorganic metal salts are more preferred. The poorly water-soluble inorganic metal salts are preferably inorganic metal salts having a solubility in 100 g of water of 0.5 g or less, and examples thereof include magnesium hydroxide, calcium hydroxide, barium hydroxide, calcium phosphate, and the like. Among these, magnesium hydroxide is more preferred. These dispersion stabilizers can be used alone or in combination.

To further enhance the effect of stabilizing dispersion, the dispersion stabilizer is preferably used in the form of a dispersion or a solution of the dispersion stabilizer by dispersing or dissolving the dispersion stabilizer in an aqueous medium. In other words, in the mixed solution preparation step, the mixed solution is preferably obtained by mixing the polymerizable monomers, the hydrophobic organic solvent, and the polymerization initiator with the dispersion stabilizer in the form of a dispersion or a solution. The aqueous medium to be used can be those listed above.

For the mixing ratio of the dispersion stabilizer in the form of a dispersion or a solution thereof to the aqueous medium, the mass ratio of "dispersion stabilizer:aqueous medium" is preferably 0.7:100 to 7:100, more preferably 1.0:100 to 4.0:100, still more preferably 1.4:100 to 3:100. When the mixing ratio of the dispersion stabilizer to the aqueous medium falls within these ranges above, the effect of stabilizing dispersion can be more appropriately enhanced.

As the method of preparing a dispersion or a solution of the dispersion stabilizer, a method of directly mixing the dispersion stabilizer with the aqueous medium may be used. Preferred is a method of reacting two or more compounds as precursors of the dispersion stabilizer (i.e., two or more precursor compounds) by mixing these in an aqueous medium, thereby generating the dispersion stabilizer.

When the two or more precursor compounds are mixed with the aqueous medium, any precursor compound can be used without limitation. For example, when a poorly water-soluble hydroxide salt such as magnesium hydroxide, calcium hydroxide, or barium hydroxide is used as the dispersion stabilizer, examples of the two or more precursor compounds include a combination of a water-soluble polyvalent metal salt and an alkali metal hydroxide, and the like.

Examples of the water-soluble polyvalent metal salt include hydrochloric acid salts, sulfuric acid salts, nitric acid salts, and acetic acid salts of polyvalent metals such as magnesium, calcium, aluminum, iron, copper, manganese, nickel, and tin, and the like. Among these, water-soluble salts of magnesium and calcium are preferred. Examples of alkali metal hydroxides include sodium hydroxide, potassium hydroxide, lithium hydroxide, and the like. For example, when magnesium hydroxide is used as the dispersion stabilizer, two or more precursor compounds are suitably a combination of magnesium chloride and sodium hydroxide.

The two or more precursor compounds can be mixed in the aqueous medium by any method. When the two or more precursor compounds are a combination of a water-soluble polyvalent metal salt and an alkali metal hydroxide, a method of adding an aqueous medium solution of the alkali metal hydroxide dropwise to an aqueous medium solution of the water-soluble polyvalent metal salt with stirring is suitable.

In the aqueous medium solution of the water-soluble polyvalent metal salt, the content of the water-soluble polyvalent metal salt is preferably 2 to 8 parts by weight, more preferably 3 to 6 parts by weight relative to 100 parts by weight of the aqueous medium solution. In the aqueous medium solution of the alkali metal hydroxide, the content of the alkali metal hydroxide is preferably 6 to 20 parts by weight, more preferably 8 to 18 parts by weight relative to 100 parts by weight of the aqueous medium solution. The aqueous medium to be used can be those listed above.

In the mixed solution preparation step, the mixed solution can be obtained by mixing the above-mentioned components by stirring or the like. At this time, other materials may be optionally added in addition to the above-mentioned components. In the mixed solution preparation step, a mixed solution is prepared, in which an oil phase containing lipophilic materials such as the polymerizable monomers, the hydrophobic organic solvent, and the polymerization initiator is dispersed into a particle size of about several millimeters in an aqueous phase containing the aqueous medium and the dispersion stabilizer optionally used. The dispersion state of these components in the mixed solution can also be observed by the naked eye depending on the types of the components.

In the mixed solution preparation step, to readily obtain a homogenous composition of the shell portion, the mixed solution is preferably prepared by preliminarily preparing an oil phase containing the polymerizable monomers, the hydrophobic organic solvent, and the polymerization initiator, and mixing the oil phase with a dispersion or solution prepared by dispersing or dissolving the dispersion stabilizer in the aqueous medium.

(B) Suspension step

The suspension step is a step of suspending the mixed solution obtained in the mixed solution preparation step described above, thereby preparing a suspension in which droplets of the polymerizable monomer composition containing the polymerizable monomers, the hydrophobic organic solvent, and the polymerization initiator are dispersed in the aqueous medium.

The suspension method for forming droplets of the polymerizable monomer composition is not particularly limited. Preferred is a method of stirring the mixed solution obtained in the mixed solution preparation step with a stirrer enabling strong stirring. The stirrer used in the suspension step is not particularly limited, and for example, a stirring apparatus including a stirrer having a stirring blade or a rotor and a feeding tank for feeding to the stirrer can be used. The stirrer may be any stirrer having a stirring blade or a rotor, and is not particularly limited. To efficiently form a suspension, suitable is a stirrer having a combination of a rotor as a concentric ring with comb teeth and a stator, in which the rotor is rotated at a high speed to flow the dispersion from the inside of the rotor to the outside of the stator, and the dispersion is stirred in gaps between the rotor and the stator.

Examples of the stirrer having such a configuration include in-line type emulsion dispersing machines, and examples of in-line type emulsion dispersing machines include a product name "CAVITRON" (available from Eurotec, Ltd.), a product name "MILDER" (available from Pacific Machinery & Engineering Co., Ltd.), a product name "EBARA MILDER" (available from EBARA CORPORATION), a product name "TK Pipeline Homomixer" (available from Tokushu Kika Kogyo Co., Ltd.), a product name "Colloid Mill" (available from Shinko Pantec Co., Ltd.), a product name "SLASHER" (available from NIPPON COKE & ENGINEERING CO., LTD.), a product name "Trigonal wet grinder" (available from Mitsui Miike Kakoki K.K.), a product name "Fine Flow Mill" (available from Pacific Machinery & Engineering Co., Ltd.), and the like.

In the suspension step, a suspension in which droplets of the polymerizable monomer composition containing the lipophilic materials above are homogeneously dispersed in the aqueous medium can be obtained. Such droplets of the polymerizable monomer composition are difficult to observe with the naked eye, and can be observed with a known observation apparatus such as an optical microscope, for example. In the suspension step, phase separation occurs in the droplets of the polymerizable monomer composition, and thus a hydrophobic organic solvent having a low polarity is likely to concentrate on the insides of the droplets. As a result, in the obtained droplets, the hydrophobic organic solvent is distributed in the inside of each droplet and other materials other than the hydrophobic organic solvent are distributed in the periphery thereof.

(C) Polymerization step

The polymerization step is a step of subjecting the suspension prepared in the suspension step described above to a polymerization reaction, thereby preparing a precursor composition containing precursor particles having hollow portions and containing the hydrophobic organic solvent encapsulated in the hollow portions.

In the polymerization step, the polymerizable monomers in the droplets are polymerized in the state where the hydrophobic organic solvent is encapsulated in the droplets of the polymerizable monomer composition. Thereby, precursor particles each having a shell containing a resin as the polymerized product of the polymerizable monomers and a hollow portion filled with the hydrophobic organic solvent are formed.

In the polymerization step, the droplets of the polymerizable monomer composition are subjected to a polymerization reaction in the state where the hydrophobic organic solvent is encapsulated in the droplets. Thereby, the polymerization reaction is likely to progress while the shape of the droplets is maintained, and the size and void ratio of the precursor particles are readily controlled. Since the polymerizable monomers are used in combination with the hydrophobic organic solvent, the hydrophobic organic solvent has a low polarity to the shell of the precursor particles, and thus is less compatible with the shell. Thus, it is likely that phase separation sufficiently occurs and only one hollow portion is formed in the shell.

The polymerization method is not particularly limited, and for example, a batch-wise (batch) method, a semi-continuous method, a continuous method, or the like can be used. The polymerization temperature is preferably 40 to 90°C, more preferably 50 to 80°C. The reaction time for polymerization is preferably 1 to 48 hours, more preferably 3 to 24 hours.

Through the polymerization step, a precursor composition is obtained, in which precursor particles encapsulating the hydrophobic solvent are dispersed in an aqueous phase containing the aqueous medium as the main component.

(D) Solvent removal step

The solvent removal step is a step of removing the hydrophobic organic solvent encapsulated in the precursor particles obtained in the polymerization step.

Preferably, prior to solvent removal in the solvent removal step, the precursor composition obtained in the polymerization step is preliminarily subjected to solid liquid separation, thereby obtaining solid contents containing the precursor particles encapsulating the hydrophobic organic solvent. After the solid contents containing the precursor particles are obtained by the solid liquid separation, the hydrophobic organic solvent encapsulated in the precursor particles are removed in the air. Thereby, the hydrophobic organic solvent inside the precursor particles is replaced by air, and hollow particles filled with a gas can be obtained.

The method for subjecting the precursor composition to solid liquid separation is not particularly limited, and a known method can be used. Examples of the solid liquid separation method include centrifugation, filtration, static separation, and the like. Among these, centrifugation or filtration can be used. From the viewpoint of ease in operation, centrifugation may be used. After the solid liquid separation is performed, an optional step such as a preparative drying step may be further used. Examples of the preparative drying step include a step of preparatively drying the solid contents obtained after the solid liquid separation step with a drying apparatus such as a dryer or a drying tool such as a hand dryer.

The expression "in the air" in the solvent removal step strictly indicates under an environment in which no liquid content is present on the outside of the precursor particles and under an environment in which only a trace of liquid content in an amount not affecting the removal of the hydrophobic organic solvent is present on the outside of the precursor particles. It can also be said that the expression "in the air" is a state where no precursor particles are present in the slurry or a state where the precursor particles are present in the dry powder. In other words, in the solvent removal step, it is desired that the hydrophobic organic solvent is removed under an environment in which the precursor particles are directly in contact with an external gas.

The method of removing the hydrophobic organic solvent in the precursor particles is not particularly limited, and a known method can be used. Examples thereof include drying under reduced pressure, drying with heating, and pneumatic conveying drying. These methods may be used in combination. In particular, when drying with heating is used, the heating temperature need to be set at a temperature equal to or higher than the boiling point of the hydrophobic organic solvent and equal to or lower than the highest temperature at which the shell structures of the precursor particles do not collapse. Accordingly, although it depends on the composition of the shell in the precursor particles and the type of the hydrophobic organic solvent, the heating temperature is preferably 50 to 200°C, more preferably 70 to 200°C, still more preferably 100 to 200°C. By the drying operation in the air, the hydrophobic organic solvent inside the precursor particles is replaced by an external gas, and as a result, hollow particles having hollow portions filled with the gas are obtained.

The drying atmosphere is not particularly limited, and can be appropriately selected according to the application of the hollow particles. The drying atmosphere to be considered is air, oxygen, nitrogen, argon, or the like. By filling the hollow particles with a gas once and drying the hollow particles under reduced pressure, hollow particles whose insides are temporarily in vacuum are also obtained.

Alternatively, the hydrophobic organic solvent may be removed as follows: the slurry-like precursor composition obtained in the polymerization step is not subjected to the solid liquid separation, and the hydrophobic organic solvent encapsulated in the precursor particles is replaced by the aqueous medium of the slurry in the slurry containing the precursor particles and the aqueous medium. In this method, the hydrophobic organic solvent encapsulated in the precursor particles in the precursor composition is removed by bubbling an inert gas into the precursor composition at a temperature equal to or higher than the temperature obtained by subtracting 35°C from the boiling point of he hydrophobic organic solvent. Thereby, the amount of residual hydrophobic organic solvent in the hollow particles can be reduced. Here, when the hydrophobic organic solvent is a mixed solvent containing a plurality of hydrophobic organic solvents and a plurality of boiling points is present, the boiling point of the hydrophobic organic solvent in the solvent removal step is defined as the boiling point of the solvent having the highest boiling point among the solvents contained in the mixed solvent, i.e., the highest boiling point among the plurality of boiling points.

To reduce the amount of residual hydrophobic organic solvent in the hollow particles, the temperature when the inert gas is bubbled into the precursor composition is a temperature equal to or higher than the temperature obtained by subtracting preferably 30°C, more preferably 20°C from the boiling point of the hydrophobic organic solvent. The temperature during bubbling is usually a temperature equal to or higher than the polymerization temperature in the polymerization step. Although it is not particularly limited, the temperature during bubbling may be 50°C or higher and 100°C or lower. Examples of the inert gas for bubbling include, but not particularly limited to, nitrogen, argon, and the like.

The conditions for bubbling are appropriately adjusted depending on the type and amount of the hydrophobic organic solvent to remove the hydrophobic organic solvent encapsulated in the precursor particles, and are not particularly limited. For example, preferred is a method of bubbling an inert gas at a rate of 1 to 3 L/min for 1 to 10 hours. By this method, an aqueous slurry in which the aqueous medium is encapsulated in the precursor particles is obtained. This slurry is subjected to solid liquid separation to obtain hollow particles, which are dried to remove the aqueous medium inside the hollow particles. Thereby, hollow particles having hollow portions filled with a gas are obtained.

In comparison of these methods, i.e., the method of obtaining hollow particles having hollow portions filled with a gas by subjecting the slurry-like precursor composition to solid liquid separation and then removing the hydrophobic organic solvent in the precursor particles in the air and the method of obtaining hollow particles having hollow portions filled with a gas by replacing the hydrophobic organic solvent encapsulated in the precursor particles by the aqueous medium of the slurry in the slurry containing the precursor particles and the aqueous medium, then subjecting the slurry to solid liquid separation, and then removing the aqueous medium in the precursor particles in the air, the former method is advantageous in that the hollow particles are difficult to crush in the step of removing the hydrophobic organic solvent, while the latter method is advantageous in that the amount of residual hydrophobic organic solvent is reduced by bubbling using an inert gas.

In addition, the following methods may be used as the method of removing the hydrophobic organic solvent encapsulated in the precursor particles after the polymerization step and the before the solid liquid separation step without subjecting the slurry-like precursor composition obtained in the polymerization step to solid liquid separation: for example, a method of evaporating and distilling off the hydrophobic organic solvent encapsulated in the precursor particles from the precursor composition under a predetermined pressure (under high pressure, under normal pressure, or under reduced pressure); or a method of introducing an inert gas such as nitrogen, argon, or helium or a water vapor into the precursor composition under predetermined pressure (under high pressure, under normal pressure, or under reduced pressure), and evaporating and distilling off the hydrophobic organic solvent.

(E) Other steps

The production method may comprise other steps. Examples of the other steps include (E-1) a washing step and/or (E-2) another hollow portion replacement step.

(E-1) Washing step

The production method preferably comprises a washing step before or after the recovery step. For example, when the dispersion stabilizer is used, preferably, the production method comprises a washing step before the recovery step, the washing step involving performing washing by adding an acid or an alkali to remove the residual dispersion stabilizer in the hollow particle slurry containing the hollow particles and the aqueous medium. When the dispersion stabilizer used is a dispersion stabilizer soluble to an acid, preferably, the acid is added to the precursor composition containing the precursor particles, and washing is performed. In contrast, when the dispersion stabilizer used is a dispersion stabilizer soluble to an alkali, preferably, the alkali is added to the precursor composition containing the precursor particles, and washing is performed.

When the dispersion stabilizer soluble to an acid is used as the dispersion stabilizer, it is preferred that the acid be added to the precursor composition containing the precursor particles, and the pH be adjusted to preferably 6.5 or less, more preferably 6 or less. As the acid to be added, an inorganic acid such as sulfuric acid, hydrochloric acid, or nitric acid or an organic acid such as formic acid or acetic acid can be used. In particular, sulfuric acid is suitable because of its large efficiency in removal of the dispersion stabilizer and a light load over the production facility.

(E-2) Another hollow portion replacement step

Another hollow portion replacement step is a step of replacing a gas or a liquid inside the hollow particles by another gas or liquid. By such a replacement, the environment inside the hollow particles can be changed, a molecule can be selectively sealed inside the hollow particles, or the chemical structure inside the hollow particles can be modified according to the application.

<Resin composition>

The hollow particles according to the present invention can be mixed with a resin, thereby preparing a resin composition.

The resin composition may be a liquid resin composition, or may be a resin molded article. Examples of liquid resin compositions include those containing a liquid matrix resin before a curing reaction, those containing the components dissolved or dispersed in a solvent, and resin compositions each of which contains a thermoplastic resin as a matrix resin and are in a liquid state as a result of melting of the resin. Examples of resin molded articles include molded articles formed of the above-mentioned liquid resin compositions by known methods.

The matrix resin contained in the resin composition is not particularly limited, and can be a thermosetting resin or a thermoplastic resin, for example. The resin contained in the resin composition may be an unreacted monomer, or may be a prepolymer or a macromonomer, may be a polymer, or a precursor of a curable resin, such as a polyamic acid. The matrix resin contained in the resin composition can contain a thermoplastic elastomer as the resin. Further, the resin composition may contain rubber.

The thermosetting resin to be used can be known thermosetting resins, and is not particularly limited. Examples thereof include phenol resins, melamine resins, urea resins, unsaturated polyester resins, epoxy resins, polyurethane resins, silicon resins, alkyd resins, thermally curable modified polyphenylene ether resins, thermally curable polyimide resins, benzoxazine resins, urea resins, allyl resins, aniline resins, maleimide resins, bismaleimide triazine resins, liquid crystalline polyester resins, vinyl ester resins, unsaturated polyester resins, cyanate ester resins, polyether imide resins, and the like. These thermosetting resins can be used alone or in combination.

The thermoplastic resin to be used can be known thermoplastic resins, and is not particularly limited. Examples thereof include polyolefins such as polypropylene and polyethylene; polyamides such as PA6, PA66, and PA12; polyimide, polyamidimide, polyether imide, polyether ketone ketone, polyvinyl chloride, polystyrene, poly(meth)acrylate, polycarbonate, polyvinylidene fluoride, acrylonitrile-butadiene-styrene copolymers (ABSs), acrylonitrile-styrene copolymers (ASs), polyphenylene ether, polyphenylene sulfide, polyester, polytetrafluoroethylene, thermoplastic elastomers, and the like. These thermoplastic resins can be used alone or in combination.

Among these resins, insulative resins such as epoxy resins, thermally curable modified polyphenylene ether resins, thermally curable polyimide resins, silicon resins, benzoxazine resins, melamine resins, urea resins, allyl resins, phenol resins, unsaturated polyester resins, polyurethane resins, and aniline resins are preferably used in applications where a reduction in dielectric constant or a reduction in dielectric loss tangent is required. Among these, epoxy resins, thermally curable polyimide resins, modified polyphenylene ether resins, silicon resins, benzoxazine resins, and melamine resins are preferably used. These insulative resins can be used alone or in combination.

As the thermoplastic elastomer, thermoplastic elastic polymers traditionally used as molding resins can be used, and examples thereof include urethane elastomers, styrene elastomers, olefin elastomers, amide elastomers, ester elastomers, and the like. The thermoplastic elastomer generally indicates an elastomer which has rubber elasticity at normal temperature (25°C) and can be plasticized and molded at a high temperature. These thermoplastic elastomers may be used alone or in combination.

The rubber may be a rubber containing natural rubber (NR), isoprene rubber (IR), butadiene rubber (BR), styrene-butadiene copolymer rubber (SBR), acrylonitrile-butadiene copolymer rubber (NBR), ethylenepropylene-diene terpolymer (EPDM), or the like. These rubbers may be used alone or in combination.

The content of the resin in 100 mass% of the total solid contents in the resin composition is not particularly limited, and is preferably 50 to 95 mass% or less. When the content of the resin is equal to or higher than the lower limit, molding properties in production of resin molded articles are excellent, and resin molded articles having high mechanical strength are obtained. On the other hand, when the content of the resin is equal to or lower than the upper limit, the hollow particles according to the present invention can be sufficiently contained, and thus, the effects of reducing the weight, reducing the dielectric loss tangent, and the like can be sufficiently demonstrated by the hollow particles according to the present invention.

The resin composition may further contain an additive such as a curing agent for progressing a curing reaction, a curing catalyst, or an initiator according to the type of the resin. Examples of the curing agent include amines, acid anhydrides, imidazoles, thiols, phenols, naphthols, benzoxazines, cyanate esters, carbodiimides, and the like. The content of the curing agent is not particularly limited, and can be 5 to 120 parts by mass relative to 100 parts by mass of the resin, for example.

In 100 mass% of the total solid contents in the resin composition, the content of the hollow particles according to the present invention is not particularly limited, and is preferably 5 to 50 mass%. When the content of the hollow particles is equal to or higher than the lower limit, the effects of reducing the weight, reducing the dielectric loss tangent, and the like can be sufficiently demonstrated by the hollow particles according to the present invention. On the other hand, when the content of the hollow particles is equal to or lower than the upper limit, the resin can be sufficiently contained, and thus molding properties and mechanical strength can be improved.

The resin composition may further contain additives such as a compatibilizer, an ultraviolet absorbing agent, a colorant, a heat stabilizer, and a filler, and a solvent or the like as needed in the range not impairing the effects of the present disclosure. The resin composition may further contain organic or inorganic fibers such as carbon fibers, glass fibers, aramid fibers, or polyethylene fibers.

The resin composition can be prepared, for example, by mixing the hollow particles according to the present invention and the resin with the additives, the solvent, and the like optionally added. When the resin in the resin composition is a thermoplastic resin, the mixing may be performed by adding the hollow particles according to the present invention and the additives optionally added to a melted thermoplastic resin, and melt kneading these. The resin composition thus prepared may be a liquid resin composition, or may be a resin molded article obtained by forming the liquid resin composition into a molded article by a known method.

The resin molded article can be produced by any production method without limitation. For example, the resin molded article can be obtained by applying a liquid resin composition onto a support, the liquid resin composition being prepared by adding the hollow particles and the like to a liquid matrix resin before a curing reaction or by dissolving or dispersing the components in a solvent, and optionally curing the liquid resin composition.

Examples of a material for the support include resins such as polyethylene terephthalate and polyethylene naphthalate; metals such as copper, aluminum, nickel, chromium, gold, and silver; and the like. These supports may have a surface coated with a mold release agent.

The resin molded article can also be obtained by impregnating the liquid resin composition with a base material, and optionally drying and curing the composition. Examples of the base material include inorganic fibers such as carbon fibers, glass fibers, metal fibers, and ceramic fibers; organic synthetic fibers such as polyamide fibers, polyester fibers, polyolefin fibers, and Novoloid fibers; and the like. Among these, glass fibers (glass cloth) are preferred. The base material can be in any form, and a textile, a non-woven fabric, or the like can be used.

The liquid resin composition can be applied by any method, and a known method can be used. Examples thereof include dip coating, roll coating, curtain coating, die coating, slit coating, gravure coating, and the like.

When the liquid resin composition contains a solvent, the resin composition is preferably dried after the application or impregnation. The drying temperature is preferably around a temperature at which the matrix resin is not cured, and is usually 20°C or higher and 200°C or lower, preferably 30°C or higher and 150°C or lower. The drying time is usually 30 seconds or more and 1 hour or less, preferably 1 minute or more and 30 minutes or less.

The curing reaction of the resin composition is performed by a method according to the type of the resin, and the method is not particularly limited. When a resin curable by heating is contained, the heating temperature for the curing reaction is appropriately adjusted according to the type of the resin, and is not particularly limited. The heating temperature is usually 30°C or higher and 400°C or lower, preferably 70°C or higher and 300°C or lower, more preferably 100°C or higher and 200°C or lower. The curing time is 5 minutes or more and 5 hours or less, preferably 30 minutes or more and 3 hours or less. The heating method is not particularly limited, and may be performed using an electric oven, for example.

The liquid resin before the curing reaction and the resin dissolved or dispersed in the solvent may be a thermosetting resin, or may be a thermoplastic resin.

Alternatively, the resin molded article may be obtained by molding a liquid resin composition which contains a melted thermoplastic resin as the resin into a desired shape by a known molding method such as extrusion molding, injection molding, press molding, or compression molding.

The resin molded article can have any shape, and the shape can be selected from a variety of shapes into which the resin composition can be molded. For example, the resin molded article can have any shape such as sheet-like shapes, film-like shapes, plate-like shapes, tubular shapes, and other various steric shapes. When the resin molded article contains fibers, the fibers contained in the resin molded article may be in the state of a non-woven fabric. When the resin molded article contains fibers, it may be a molded article of a resin composition prepared by adding the hollow particles according to the present invention to a fiber-reinforced plastic containing the above-mentioned resin and fibers.

Examples of applications of the resin composition according to the present disclosure include those in which the resin composition can be used, among the above-mentioned applications of the hollow particles according to the present invention.

EXAMPLES

Hereinafter, the present invention will be more specifically described by way of Examples and Comparative Examples, but the present invention is not limited to only these Examples. To be noted, parts and % are mass-based unless otherwise specified. A variety of measurements were performed by the methods described below.

<True density and void ratio of hollow particles>

(Measurement of apparent density of hollow particles)

Initially, about 30 $cm^3$ of hollow particles was added to a volumetric flask having a volume of 100 $cm^3$, and the mass of the added hollow particles was precisely measured. Next, isopropanol was added up to the exact gauge line of the volumetric flask into which the hollow particles were added carefully to avoid inclusion of air bubbles. The mass of isopropanol added to the volumetric flask was precisely measured, and based on Expression (II) below, the apparent density D1 ($g/cm^3$) of the hollow particles was calculated.

$$\text{apparent density } D_1 \text{ } (g/cm^3) \text{ of hollow particles} = [\text{mass of hollow --> particles}] \div (100 - [\text{mass of isopropanol}] \div [\text{density of isopropanol at measurement temperature}]) \qquad \text{(II)}$$

(Measurement of true density of hollow particles)

After hollow particles were preliminarily ground, about 10 g of the ground pieces of the hollow particles was added to a volumetric flask having a volume of 100 $cm^3$, and the mass of the added ground pieces was precisely measured. In the next step, isopropanol was added to the volumetric flask as in the measurement of the apparent density, and the mass of isopropanol was precisely measured. Then, based on Expression (I) below, the true density $D_0$ ($g/cm^3$) of the hollow particles was calculated.

$$\text{true density } D_0 \text{ } (g/cm^3) \text{ of hollow particles} = [\text{mass of ground pieces of hollow particles}] \div (100 - [\text{mass of iso-propanol}] \div [\text{density of isopropanol at measurement temperature}]) \qquad \text{(I)}$$

(Calculation of void ratio of hollow particles)

The void ratio (%) of the hollow particles was calculated from the apparent density $D_1$ and the true density $D_0$ of the hollow particles using Expression (III) below:

$$\text{void ratio (\%) of hollow particles} = 100 - [\text{apparent density } D_1 \text{ of hollow particles}] \div [\text{true density } D_0 \text{ of hollow particles}] \times 100 \qquad \text{(III)}$$

<Volume average particle size (Dv) and particle size distribution (Dv/Dn) of hollow particles>

Using a particle size distribution analyzer (available from Beckman Coulter, Inc., product name: Multisizer 4e), the volume average particle size (Dv) and the number average particle diameter (Dn) of the hollow particles were measured, and the particle size distribution (Dv/Dn) was calculated. The measurement conditions were as follows: the aperture diameter was 50 $\mu$m, the dispersive medium was ISOTON II (product name), the concentration was 10%, and 100,000 particles were measured. Specifically, 0.2 g of the hollow particles was taken into a beaker, and a surfactant aqueous solution (available from Fujifilm Corporation, product name: DRIWEL) as a dispersant was added thereto. Further, 2 ml of a dispersive medium was added thereto to wet the hollow particles. Thereafter, 10 ml of the dispersive medium was added, and dispersion was performed for 1 minute with an ultrasonic disperser, followed by measurement with the particle size distribution analyzer.

<Toluene immersion test>

Under an environment at 25°C, 0.1 mg of hollow particles was added to 4 mL of toluene, and these were shaken using a shaker at a rate of 100 rpm for 10 minutes. The mixture after shaking was left to stand for 48 hours or 120 hours. Thereafter, the precipitating hollow particles in toluene were separated with a centrifuge, and were dried, and the mass of the precipitating hollow particles in toluene was measured. Then, the proportion of the mass of the precipitating hollow particles in toluene in the total mass of the hollow particles immersed in toluene was calculated to determine the proportion of the precipitating hollow particles, and the hollow particles were evaluated based on the criteria for evaluation below.

[Criteria for evaluation in toluene immersion test]

A: The proportion of the precipitating hollow particles after the mixture is left to stand for 120 hours is less than 5 mass%.
B: The proportion of the precipitating hollow particles after it is left to stand for 120 hours is 5 mass% or more, and the proportion of the precipitating hollow particles after it is left to stand for 48 hours is less than 5 mass%.
X: The proportion of the precipitating hollow particles after it is left to stand for 48 hours is 5 mass% or more.

It is determined that a smaller proportion of the precipitating hollow particles indicates higher solvent resistance against toluene.

<Methyl ethyl ketone immersion test>

Under an environment at 25°C, 0.1 mg of hollow particles was added to 4 mL of methyl ethyl ketone, and these were shaken using a shaker at a rate of 100 rpm for 10 minutes. The mixture after shaking was left to stand for 24 hours. Thereafter, the precipitating hollow particles in methyl ethyl ketone were separated with a centrifuge, and were dried, and the mass of the precipitating hollow particles in methyl ethyl ketone was measured. Then, the proportion of the mass of the precipitating hollow particles in methyl ethyl ketone in the total mass of the hollow particles immersed in methyl ethyl ketone was calculated to determine the proportion of the precipitating hollow particles, and the hollow particles were evaluated based on the criteria for evaluation below.

[Criteria for evaluation in methyl ethyl ketone immersion test]

A: The proportion of the precipitating hollow particles is less than 5 mass%.
X: The proportion of the precipitating hollow particles is 5 mass% or more.

<Acetone immersion test>

Under an environment at 25°C, 0.1 mg of hollow particles was added to 4 mL of acetone, and these were shaken using a shaker at a rate of 100 rpm for 10 minutes. The mixture after shaking was left to stand for 24 hours. Thereafter, the precipitating hollow particles in acetone were separated with a centrifuge, and were dried, and the mass of the precipitating hollow particles in acetone was measured. Then, the proportion of the mass of the precipitating hollow particles in acetone in the total mass of the hollow particles immersed in acetone was calculated to determine the proportion of the precipitating hollow particles, and the hollow particles were evaluated based on the criteria for evaluation below.

[Criteria for evaluation in acetone immersion test]

A: The proportion of the precipitating hollow particles is less than 5 mass%.
X: The proportion of the precipitating hollow particles is 5 mass% or more.

<Relative permittivity (Dk) and dielectric loss tangent (Df) of hollow particles>

Using the hollow particles obtained in Examples, the relative permittivity (Dk) and dielectric loss tangent (Df) of the hollow particles at a frequency of 1 GHz and room temperature (25°C) were measured with a measurement apparatus (available from AET, Model: ADMS01Nc), and were evaluated based on the criteria for evaluation below. It is determined that a lower relative permittivity (Dk) indicates more excellent insulation. It is determined that a lower dielectric loss tangent (Df) indicates more excellent insulation.

[Criteria for evaluation in relative permittivity (Dk)]

A: The relative permittivity (Dk) is less than 1.55.
B: The relative permittivity (Dk) is 1.55 or more and less than 1.57.
C: The relative permittivity (Dk) is 1.57 or more and less than 1.60.
X: The relative permittivity (Dk) is 1.60 or more.

[Criteria for evaluation in dielectric loss tangent (Df)]

A: The dielectric loss tangent (Df) is less than 0.0085.
B: The dielectric loss tangent (Df) is 0.0085 or more and less than 0.010.
C: The dielectric loss tangent (Df) is 0.010 or more and less than 0.012.
X: The dielectric loss tangent (Df) is 0.012 or more.

[Example 1]

(1) Mixed solution preparation step

Initially, materials shown below were mixed to prepare an oil phase.

ethylene glycol dimethacrylate 31.85 parts
trimethylolpropane trimethacrylate 13.65 parts
2,2'-azobis(2,4-dimethylvaleronitrile) 1.04 parts
cyclohexane 54.5 parts

Next, in a stirring tank, under stirring, an aqueous solution of 16.5 parts of sodium hydroxide (alkali metal hydroxide) dissolved in 55 parts of deionized water was added to an aqueous solution of 23.5 parts of magnesium chloride (water-soluble polyvalent metal salt) dissolved in 225 parts of deionized water to prepare a magnesium hydroxide colloid (poorly water-soluble metal hydroxide colloid) dispersion. Stirring was stopped after 15 minutes from the addition, giving an aqueous phase. The resulting aqueous phase was mixed with the resulting oil phase to prepare a mixed solution.

(2) Suspension step

In the next step, using the mixed solution obtained in the mixed solution preparation step, the mixed solution was suspended by a treatment with an in-line type emulsion dispersing machine and a stirring apparatus equipped with a supplying tank of the mixed solution, thereby preparing a suspension in which monomer droplets encapsulating heptane were dispersed.

(3) Polymerization step

The suspension obtained in the suspension step above was heated to 65°C in a nitrogen atmosphere, and was stirred under a temperature condition of 65°C for 24 hours to cause a polymerization reaction. By this polymerization reaction, a precursor composition was obtained, which was a slurry solution in which precursor particles encapsulating the hydrophobic solvent were dispersed in water.

(4) Washing step and solid liquid separation step

The precursor composition obtained in the polymerization step above was washed with diluted sulfuric acid (25°C, 10 minutes) to adjust the pH to 5.5 or less. In the next step, after water was separated by filtration, 200 parts of deionized water was newly added to prepare a slurry again. Then, a treatment of washing with water (washing, filtration, and dehydration) was repeatedly performed at room temperature (25°C) several times, followed by separation through filtration to obtain solid contents.

(5) Drying step

The precursor particles obtained in the solid liquid separation step above were dried by performing a heat treatment for 24 hours with a vacuum dryer under a vacuum condition at 200°C. Thereby, the water content and the encapsulated solvent were removed, obtaining hollow particles in Example 1. The monomer composition of the shell polymer in the resulting hollow particles mostly corresponded to the composition of the polymerizable monomers fed to the polymerization. The resulting hollow particles were measured for true density, void ratio, volume average particle size (Dv), particle size distribution (Dv/Dn), relative permittivity (Dk), and dielectric loss tangent (Df). The results are shown in Table 1.

[Examples 2 to 7, Comparative Examples 1 to 4]

Hollow particles were obtained in the same manner as in Example 1 except that the types and amounts of the monomer, the oil-soluble polymerization initiator, and the hydrophobic organic solvent used to prepare the oil phase in the mixed solution preparation step (1), the amounts of magnesium chloride and sodium hydroxide used to prepare the aqueous phase, and the stirring time during preparation of the aqueous phase were varied as shown in Table 1, and the polymerization temperature in the polymerization step (3) was varied as shown in Table 1. The monomer composition of the shell polymer in each of the resulting hollow particles mostly corresponded to the composition of the polymerizable monomers fed to the polymerization. The resulting hollow particles were measured and evaluated as in Example 1. The results are shown in Table 1.

The materials shown below were used in Examples and Comparative Examples.

[Monomers]

EGDMA: ethylene glycol dimethacrylate (bifunctional heteroatom-containing cross-linkable monomer)
TMPT: trimethylolpropane trimethacrylate (trifunctional heteroatom-containing cross-linkable monomer)
A-TMMT: pentaerythritol tetraacrylate (tetrafunctional heteroatom-containing cross-linkable monomer)
St: styrene (monofunctional hydrocarbon monomer) divinylbenzene (bifunctional cross-linkable hydrocarbon monomer) ethylvinylbenzene (monofunctional hydrocarbon monomer)

[Oil-soluble polymerization initiators]

initiator 1: 2,2'-azobis(2,4-dimethylvaleronitrile)
initiator 2: t-butylperoxydiethyl acetate

[Hydrophobic organic solvents]

cyclohexane

heptane

[Table 1]

[Table 1]

Table 1

| | | | Ex. 1 | Ex. 2 | Ex. 3 | Ex. 4 | Ex. 5 | Ex. 6 | Ex. 7 | Comp. Ex. 1 | Comp. Ex. 2 | Comp. Ex. 3 | Comp. Ex. 4 |
|---|---|---|---|---|---|---|---|---|---|---|---|---|---|
| <Conditions for production of hollow particles> | | | | | | | | | | | | | |
| Amounts of materials used in preparation of mixed solution | | | | | | | | | | | | | |
| Oil phase | EGDMA | (parts) | 31.85 | 31.85 | 27.3 | 29.58 | 31.85 | 45.5 | 29.575 | 0 | 22.75 | 27.3 | 7.81 |
| | TMPT | (parts) | 13.65 | 0 | 0 | 0 | 0 | 0 | 0 | 0 | 0 | 0 | 0 |
| | A-TMMT | (parts) | 0 | 9.1 | 9.1 | 9.1 | 9.1 | 0 | 9.1 | 0 | 9.1 | 9.1 | 7.81 |
| | St | (parts) | 0 | 0 | 0 | 0 | 4.55 | 0 | 0 | 0 | 0 | 9.1 | 0 |
| | Divinylbenzene | (parts) | 0 | 4.37 | 8.7 | 3.9 | 0.0 | 0.0 | 6.6 | 37.5 | 13.1 | 0.0 | 22.5 |
| | Ethylvinylbenzene | (parts) | 0 | 0.182 | 0.4 | 2.9 | 0.0 | 0.0 | 0.3 | 1.6 | 0.5 | 0.0 | 0.9 |
| | Cyclohexane | (parts) | 54.5 | 54.5 | 54.5 | 54.5 | 54.5 | 54.5 | 54.5 | 0 | 54.5 | 54.5 | 0 |
| | Heptane | (parts) | 0 | 0 | 0 | 0 | 0 | 0 | 0 | 60.8 | 0 | 0 | 60.8 |
| | Initiator 1 | (parts) | 1.04 | 1.04 | 1.04 | 1.04 | 1.04 | 1.04 | 1.04 | 0 | 1.04 | 1.04 | 1.04 |
| | Initiator 2 | (parts) | 0 | 0 | 0 | 0 | 0 | 0 | 0 | 0.89 | 0 | 0 | 0 |
| Aqueous phase | Magnesium chloride | (parts) | 23.5 | 7.8 | 7.8 | 7.8 | 7.8 | 23.5 | 7.8 | 15.7 | 7.8 | 7.8 | 7.8 |
| | Sodium hydroxide | (parts) | 16.5 | 5.5 | 5.5 | 5.5 | 5.5 | 16.5 | 5.5 | 11.0 | 5.5 | 5.5 | 5.5 |
| Stirring time during preparation of aqueous phase | | (min) | 15 | 40 | 40 | 40 | 40 | 15 | 40 | 15 | 40 | 40 | 40 |
| Polymerization temperature | | (°C) | 65 | 65 | 65 | 65 | 65 | 65 | 65 | 80 | 65 | 65 | 65 |
| <Hollow particles> | | | | | | | | | | | | | |

(continued)

| | | Ex. 1 | Ex. 2 | Ex. 3 | Ex. 4 | Ex. 5 | Ex. 6 | Ex. 7 | Comp. Ex. 1 | Comp. Ex. 2 | Comp. Ex. 3 | Comp. Ex. 4 |
|---|---|---|---|---|---|---|---|---|---|---|---|---|
| Proportion of monofunctional monomer unit (Value of B in Expression (1)) | (mass%) | 0.0 | 0.4 | 0.8 | 6.5 | 10.0 | 0.0 | 0.6 | 4.0 | 1.2 | 20.0 | 2.4 |
| Proportion of heteroatom-containing monomer unit | (mass%) | 100 | 90 | 80 | 85 | 90 | 100 | 85 | 0 | 70 | 80 | 40 |
| True density (Value of A in Expression (1)) | (g/cm³) | 1.20 | 1.18 | 1.16 | 1.17 | 1.18 | 1.20 | 1.17 | 1.01 | 1.14 | 1.16 | 1.09 |
| Value of C calculated from Expression (1) | | 1.20 | 1.18 | 1.15 | 1.09 | 1.06 | 1.20 | 1.16 | 0.97 | 1.13 | 0.93 | 1.06 |
| Void ratio | (%) | 64 | 63 | 63 | 63 | 63 | 64 | 63 | 70 | 63 | 63 | 71 |
| Volume average particle size (Dv) | (μm) | 2.6 | 8.0 | 6.8 | 7.5 | 8.2 | 2.8 | 7.1 | 4.1 | 7.1 | 8.8 | 7.1 |
| Particle size distribution (Dv/Dn) | | 1.22 | 1.22 | 1.21 | 1.20 | 1.18 | 1.23 | 1.21 | 1.40 | 1.22 | 1.18 | 1.21 |
| Toluene immersion test | | A | A | B | B | B | B | A | X | X | X | X |
| Methyl ethyl ketone immersion test | | A | A | A | A | A | A | A | X | X | X | X |
| Acetone immersion test | | A | A | A | A | A | A | A | X | X | X | X |
| Relative permittivity (Dk) | | C | B | A | B | B | C | B | - | - | - | - |
| Dielectric loss tangent (Df) | | C | B | A | B | B | C | B | - | - | - | - |

Table 1 clearly shows that high solvent resistance was demonstrated in the hollow particles each comprising a shell containing a resin and a hollow portion surrounded by the shell, wherein the resin was constituted by a shell polymer containing a cross-linkable monomer unit, the hollow particles had a true density of 1.16 g/cm$^3$ or more, and the value of C calculated from Expression (1) was 0.94 or more (Examples 1 to 7).

In contrast, when the hollow particles had an extremely small true density (Comparative Examples 1, 2, and 4) or when the value of C calculated from Expression (1) was extremely small (Comparative Example 3), the hollow particles had inferior solvent resistance.

**Claims**

1. Hollow particles each comprising a shell containing a resin and a hollow portion surrounded by the shell,

   wherein the resin is constituted by a shell polymer containing a cross-linkable monomer unit,
   the hollow particles have a true density of 1.16 g/cm$^3$ or more, and
   C of the hollow particles calculated from Expression (1) below has a value of 0.94 or more:

$$C = A \times (100 - B)/100 \quad \text{Expression (1)}$$

   where A represents the value (unit: g/cm$^3$) of the true density of the hollow particles, and B represents the value (unit: mass%) of the proportion of a monofunctional monomer unit contained in the shell polymer.

2. The hollow particles according to claim 1, wherein the shell polymer contains a heteroatom-containing monomer unit, and the proportion of the heteroatom-containing monomer unit contained in the shell polymer is 80 mass% or more.

3. The hollow particles according to claim 1 or 2, wherein the proportion of precipitating hollow particles when the hollow particles are immersed in toluene for 48 hours is less than 5 mass%.

4. The hollow particles according to any one of claims 1 to 3, wherein the proportion of precipitating hollow particles when the hollow particles are immersed in methyl ethyl ketone for 24 hours is less than 5 mass%.

5. The hollow particles according to any one of claims 1 to 4, wherein the proportion of precipitating hollow particles when the hollow particles are immersed in acetone for 24 hours is less than 5 mass%.

6. The hollow particles according to any one of claims 1 to 5, wherein the hollow particles have a void ratio of 60% or more.

7. The hollow particles according to any one of claims 1 to 6, wherein the shell polymer contains a tri- or higher functional cross-linkable monomer unit and a bifunctional cross-linkable monomer unit as the cross-linkable monomer unit.

8. The hollow particles according to claim 7, wherein the shell polymer contains the bifunctional cross-linkable monomer unit and the tri- or higher functional heteroatom-containing cross-linkable monomer unit in a mass ratio of "bifunctional cross-linkable monomer unit:tri- or higher functional heteroatom-containing cross-linkable monomer unit" of 10:90 to 98:2.

9. The hollow particles according to any one of claims 1 to 8, wherein the hollow particles have a volume average particle size (Dv) of 1 to 12 μm.

# EP 4 501 969 A1

## INTERNATIONAL SEARCH REPORT

| | International application No. |
|---|---|
| | **PCT/JP2023/010884** |

### A. CLASSIFICATION OF SUBJECT MATTER

***C08F 2/18***(2006.01)i; ***B01J 13/18***(2006.01)i
FI:  C08F2/18; B01J13/18

According to International Patent Classification (IPC) or to both national classification and IPC

### B. FIELDS SEARCHED

Minimum documentation searched (classification system followed by classification symbols)

C08F2/18; B01J13/18

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2021/112117 A1 (ZEON CORP.) 10 June 2021 (2021-06-10) claims, paragraphs [0031]-[0034], examples | 1-9 |
| X | WO 2021/112110 A1 (ZEON CORP.) 10 June 2021 (2021-06-10) claims, paragraph [0020], examples | 1-9 |
| X | WO 2020/066705 A1 (NIPPON ZEON CO.) 02 April 2020 (2020-04-02) claims, paragraphs [0032]-[0034], examples | 1-9 |
| X | WO 2020/066623 A1 (ZEON CORP.) 02 April 2020 (2020-04-02) claims, paragraph [0018], examples | 1-9 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **08 June 2023** | **20 June 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/010884**

| Patent document cited in search report | | | Publication date (day/month/year) | Patent family member(s) | | | Publication date (day/month/year) |
|---|---|---|---|---|---|---|---|
| WO | 2021/112117 | A1 | 10 June 2021 | US | 2022/0355264 | A1 | |
| | | | | claims, paragraphs [0088]-[0092], examples | | | |
| | | | | CN | 114761440 | A | |
| WO | 2021/112110 | A1 | 10 June 2021 | US | 2022/0410111 | A1 | |
| | | | | claims, paragraphs [0042]-[0046], examples | | | |
| | | | | EP | 4071187 | A1 | |
| | | | | CN | 114729088 | A | |
| | | | | KR | 10-2022-0114530 | A | |
| WO | 2020/066705 | A1 | 02 April 2020 | US | 2022/0033628 | A1 | |
| | | | | claims, paragraphs [0061]-[0075], examples | | | |
| | | | | EP | 3858922 | A1 | |
| | | | | CN | 112739780 | A | |
| | | | | KR | 10-2021-0066817 | A | |
| WO | 2020/066623 | A1 | 02 April 2020 | US | 2021/0354102 | A1 | |
| | | | | claims, paragraphs [0040]-[0042], examples | | | |
| | | | | EP | 3858473 | A1 | |
| | | | | CN | 112739455 | A | |
| | | | | KR | 10-2021-0063334 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021085189 A

**Non-patent literature cited in the description**

- Kagaku Binran Kisohen. Maruzen Company, II-498-II-503